# FASCICULE DE BREVET EUROPEEN

(11) **EP 0 697 075 B1**
(45) Date de publication et mention de la délivrance du brevet: **03.06.1998**
(21) Numéro de dépôt: 95912300.1
(22) Date de dépôt: 10.03.1995
(51) Int. Cl.: F16F 15/123

(54) **PREAMORTISSEUR DE TORSION, NOTAMMENT POUR VEHICULE AUTOMOBILE**
TORSIONSSCHWINGUNGSVORDÄMPFER, INSBESONDERE FÜR KRAFTFAHRZEUGE
TORSIONAL PREDAMPER, IN PARTICULAR FOR MOTOR VEHICLES

(30) Priorité: 11.03.1994 FR 9402960
(43) Date de publication de la demande: 21.02.1996
(73) Titulaire: VALEO, 75017 Paris (FR)
(72) Inventeur: GRATON, Michel, F-75020 Paris (FR); TAUVRON, Fabrice, F-94000 Créteil (FR)
(74) Mandataire: Gamonal, Didier
(86) Numéro de dépôt international: FR9500284
(87) Numéro de publication internationale: WO9524573

(56) Documents cités:
- FR-A- 2 411 999
- FR-A- 2 628 807
- GB-A- 2 151 749
- GB-A- 2 247 299
- GB-A- 2 254 398

## Description

La présente invention concerne d'une manière générale les amortisseurs de torsion, notamment pour véhicules automobiles, du genre comportant une partie d'entrée et une partie de sortie accouplées l'une par rapport à l'autre par deux dispositifs amortisseurs de torsion d'action étagée, à savoir un premier dispositif, dit préamortisseur, qui, plus faible que l'autre, constitue un bloc préassemblé avec la partie de sortie au sein du deuxième dispositif.

Elle se rapporte plus particulièrement au préamortisseur.

Un tel amortisseur est décrit dans le document FR-A-2 570 147 (US-A-4,688,666).

Dans ce document l'amortisseur de torsion est un disque de friction d'embrayage comportant (figure 1) un support 10 de garnitures de frottement 11 et un moyeu 12, qui sont mobiles angulairement l'un par rapport à l'autre dans les limites d'un débattement angulaire déterminé.

Le support 10 constitue la partie d'entrée de l'amortisseur, ses garnitures de frottement 11 étant propres à être serrées entre le plateau de pression et de réaction d'un embrayage (non visible), tandis que le moyeu 12 constitue la partie de sortie de celui-ci, ledit moyeu étant propre à être calé en rotation sur l'arbre d'entrée de la boîte de vitesses.

La partie d'entrée 10 et la partie de sortie 12 sont accouplées par deux dispositifs amortisseurs de torsion, d'action étagée, dont l'un A, dit premier amortisseur, est plus faible que l'autre B, dit deuxième dispositif, et constitue un bloc préassemblé avec la partie de sortie 12 au sein de ce deuxième dispositif B.

Chacun de ces dispositifs comporte un voile 13A,13B, deux rondelles de guidage 14A-14B solidaires l'une de l'autre et des moyens élastiques 15A,15B interposés circonférentiellement entre le voile et les rondelles de guidage.

En pratique les rondelles 14A-14B sont disposées axialement de part et d'autre du voile 13A-13B et les moyens élastiques consistent en des organes élastiques à action circonférentielle montés dans des logements 18A-18B ; 17A-17B pratiqués en vis-à-vis respectivement dans les rondelles 14A,14B et dans le voile 13A,13B.

Les organes élastiques 15A, ici des ressorts à boudin, du premier dispositif A, d'une part, sont moins raides que les organes élastiques 15B, également des ressorts à boudin, du deuxième dispositif B, et, d'autre part, sont implantés radialement en-dessous desdits organes 15B en sorte que le premier dispositif A est plus faible que le deuxième dispositif B.

Le dispositif A est monté axialement entre l'une des rondelles de guidage 14B et le voile 13B du dispositif B.

Il forme un ensemble préassemblé, ici par sertissage, avec le moyeu 12.

Le voile 13A du premier dispositif A est solidaire en rotation du moyeu 12 par un montage à cannelures, tandis que ses rondelles de guidage 14A sont attelées au deuxième dispositif B par l'intermédiaire de saillies d'entraînement 23 engagées dans des encoches 24 du voile 13B.

Ce voile 13B est monté avec un jeu angulaire par rapport au moyeu 12. Pour ce faire le voile 13B présente à sa périphérie interne un jeu de cannelures 20', de forme trapézoîdale, engrenant à jeu avec un jeu de cannelures 20, de forme trapézoïdale complémentaire, que présente le moyeu 12 à sa périphérie externe.

Le premier dispositif A intervient ainsi entre le moyeu 12 et le voile 13B du deuxième dispositif B, dont les rondelles de guidage 14B sont solidaires, ici par des rivets 21, du support 10.

Le premier dispositif A est destiné à intervenir seul lorsque le couple à transmettre est très faible ou nul dans les limites du jeu angulaire prévu entre le voile 13B et le moyeu 12, tandis que le dispositif B intervient pour des couples plus importants.

Pour cette raison ce dispositif A à organes élastiques 15A de faible raideur est appelé préamortisseur, les ressorts 15B plus raides du deuxième dispositif solidarisant globalement le voile 13B aux rondelles 14B lors du mouvement relatif entre le voile 13B et le moyeu 12. Après rattrapage du jeu entre le voile 13B et le moyeu 12, les organes 15A restent bandés et un mouvement relatif se produit entre le voile 13B et les rondelles 14B avec intervention de moyens de frottement à rondelle élastique 33B et rondelle d'application 36. Pour plus de précision, on se reportera au susmentionné document, notamment en ce qui concerne la liaison par sertissage entre les rondelles 14B.

Dans ce document les saillies 23 précitées sont portées par la rondelle de guidage 14A du premier dispositif A, adjacente au voile 13B du deuxième dispositif B. Ces saillies d'entraînement avec le voile 13B consistent en des pions de contour circulaire venus d'un seul tenant avec ladite rondelle 14A ou rapportés sur celle-ci par rivetage.

Par commodité cette rondelle de guidage 14A sera dénommée première rondelle et l'autre rondelle de guidage 14A deuxième rondelle.

Par ailleurs les rondelles 14A sont métalliques et sont reliées entre elles par des rivets 16A, qui traversent à jeu des échancrures prévues dans le voile 13A.

Il en résulte que le préamortisseur A comporte des pions 23 et des rivets 16A et qu'il faut emboutir les rondelles 14A au niveau des rivets 16A.

Ces rivets 16A s'étendent en outre entre deux ressorts consécutifs 15A, au détriment de la place occupée par lesdits ressorts, et nécessitent d'affaiblir le voile 13A pour passage desdits rivets. En outre ces rivets 16A limitent le débattement angulaire relatif entre le voile 13B et les rondelles 14 A.

Dans le document GB-A-2 247 299 est décrit un préamortisseur selon le préambule de la revendication 1. Ce préamortisseur est doté de pattes d'assemblage d'orientation axiale issues d'un seul tenant de la périphérie externe de la deuxième rondelle de guidage. Lesdites pattes d'assemblage s'étendent à la périphérie externe du voile et traversent chacune à jeu de montage une échancrure complémentaire formée à la périphérie externe de la première rondelle. L'extrémité libre des pattes d'assemblage est propre à constituer une saillie d'entraînement avec le voile du deuxième dispositif amortisseur.

En pratique les bords latéraux des pattes sont propres à coopérer avec des bords latéraux associés des échancrures pour liaison en rotation de la première rondelle avec la seconde rondelle. La première rondelle est montée mobile axialement par rapport à la première rondelle en sorte qu'initialement le préamortisseur ne forme pas un sous-ensemble.

La présente invention a pour objet de pallier les inconvénients précités.

Suivant l'invention préamortisseur du type sus-indiqué est caractérisé en ce que l'extrémité libre de certaines au moins des pattes d'assemblage est déformée radialement vers l'intérieur pour former un moyen de retenue propre à coopérer avec la face de la première rondelle tournée à l'opposé du voile en ce que lesdites déformations laissent intact les bords latéraux de ces pattes d'assemblage déformées et en ce que lesdites pattes d'assemblages s'étendent radialement au-delà de la périphérie externe du voile. De préférence, les déformations sont formées avant assemblage en sorte qu'il est formé des moyens d'encliquetage à pattes d'assemblage élastiquement déformables intervenant entre les deux rondelles de guidage.

Grâce à l'invention on réduit le nombre de pièces du préamortisseur et les rondelles de guidage sont solidarisées entre elles par les pattes d'assemblage et ce de manière simple et économique de préférence par encliquetage sans avoir à recourir à une opération de rivetage, les déformations formant des épaulements de retenue coopérant avec les bords internes des échancrures.

En outre, d'une part, le voile, de fabrication plus simple, n'est pas échancré et est donc plus robuste et, d'autre part, les pattes d'assemblage ne limitent pas le débattement angulaire relatif entre le voile et les rondelles de guidage du préamortisseur. Ces pattes sont relativement longues et donc flexibles en étant dépourvues d'une portion élargie contrairement aux pattes du document GB-A-2 247 299 en sorte qu'elles sont plus souple.

De plus la fabrication de l'ensemble unitaire préamortisseur - moyeu est simplifiée et requiert un outillage plus léger et donc moins coûteux.

Grâce à l'invention il est possible de fabriquer un sous-ensemble moyeu-voile dans une première unité de production, par exemple par sertissage du voile sur le moyeu, puis de monter le reste du préamortisseur dans une autre unité de production pour obtenir un bloc imperdable manipulable et transportable.

Grâce à la nature métallique des rondelles de guidage, d'une part, les pattes d'assemblage sont obtenues aisément par découpe et pliage à la presse, et, d'autre part, leur déformation permet d'écrouir le métal au niveau des saillies d'entraînement ce qui rigidifie et durcit celles-ci.

Du fait que les pattes sont plates et minces, les saillies ne sont pas plus encombrantes radialement que les pions précités.

Ces déformations peuvent consister en des emboutis, des crevés ou de replis qui sont aptes à franchir élastiquement les échancrures.

On notera que les rondelles de guidage sont de construction simple, la première rondelle étant plate, sans emboutissage pour sa liaison avec l'autre rondelle de guidage contrairement à celle de l'art antérieur.

En outre la première rondelle est liée en rotation à la seconde rondelle par coopération de formes entre les échancrures et les pattes.

On appréciera que les ressorts 15A du préamortisseur A forment naturellement des entretoises entre les rondelles de guidage. Le préamortisseur peut donc fonctionner avantageusement sans rondelle de frottement et les pattes sont alors simplifiées en étant dépourvues d'épaulement contrairement à celle du document GB-A-2 247 299.

On appréciera que les pattes continue d'accomplir leur fonction de blocage en rotation de la première rondelle.

De préférence elles affectent centralement les pattes en sorte que la fonction de saillie d'entraînement n'est pas perturbée.

La description qui va suivre illustre l'invention en regard des dessins annexés dans lesquels :
- la figure 1 est une vue en coupe axiale d'un disque de friction de l'art antérieur ;
- la figure 2 est une vue en couple axiale selon la ligne 2-2 de la figure 3 du bloc préassemblé partie de sortie - préamortisseur selon l'invention ;
- la figure 3 est une vue selon la flèche 3 de la figure 2 ;
- la figure 4 est une vue agrandie selon la flèche 4 de la figure 2 ;
- la figure 5 est une vue partielle selon la flèche 5 de la figure 4 ;
- les figures 6,7 et 8,9 sont des vues analogues aux figures 4 et 5 pour respectivement un deuxième et un troisième exemple de réalisation.

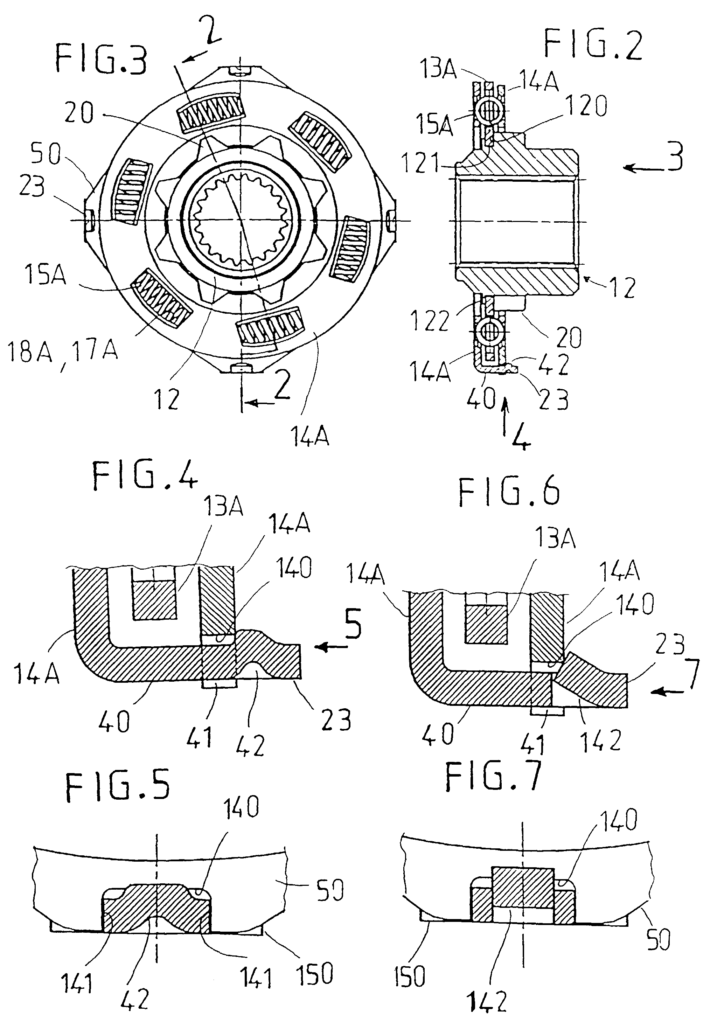

A la figure 2 on voit un bloc préassemblé moyeu 12 - préamortisseur A, les mêmes signes de références étant employés pour les éléments communs à l'invention et à ceux de l'art antérieur.

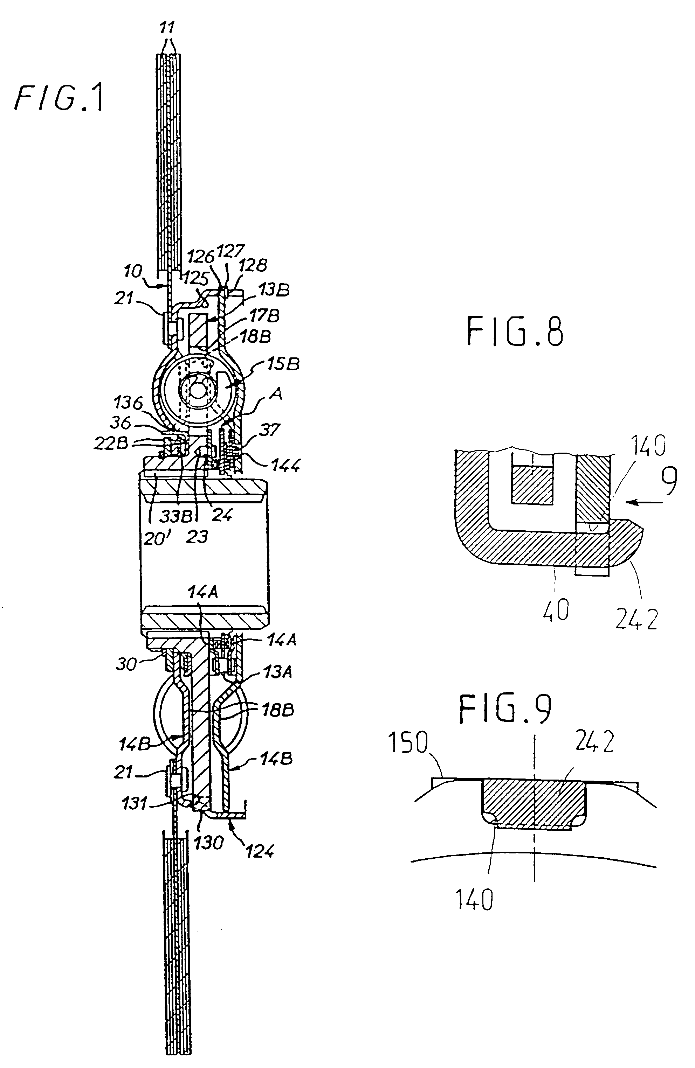

Ainsi le bloc est propre, par ses rondelles de guidage métalliques 14A, a être monté entre la rondelle de guidage 14B et le voile 13B de la figure 1, les saillies d'entraînement 23 étant propres à coopérer de manière complémentaire avec les échancrures 24 du voile 13B du deuxième dispositif B.

Ces saillies 23 pénètrent donc dans les échancrures 24 et engrènent avec celles-ci pour liaison en rotation des rondelles 14A avec le voile 13B.

Le voile 13A du préamortisseur est solidaire, au moins circonférentiellement, c'est-à-dire en rotation du moyeu 12. Ce moyeu 12 présente à sa périphérie externe en saillie sur une partie de sa longueur des cannelures 20 précitées, et dans son alésage interne des cannelures pour sa liaison en rotation avec l'arbre d'entrée de la boîte de vitesses non visible.

Au-delà d'un épaulement transversal 120 les cannelures 20 sont de hauteur réduite et, à sa périphérie interne le voile 13A, ici métallique tout comme le moyeu 12, présente des cannelures 121 par lesquelles il est en prise sans jeu avec la portion de hauteur radiale réduite des cannelures 20.

Ici le voile est solidaire également axialement du moyeu 12. Ce voile 13A est en appui sur l'épaulement 120, par l'une de ses faces, et, sur l'autre de ses faces, un bourrelet 122, venu par sertissage de la portion de hauteur radiale réduite des cannelures 20, le maintien en appui axial contre l'épaulement transversal 120.

Ainsi il est formé par sertissage un sous-ensemble unitaire moyeu 12 - préamortisseur A manipulable et transportable.

Les rondelles de guidage 14A métalliques, réalisées par emboutissage à la presse, s'étendent axialement de part et d'autre du voile 13A et présentent en regard des fenêtres 17A du voile des fenêtres 18A pour montage des organes élastiques 15A, ici des ressorts à boudin, en variante des blocs en matière élastique tels que de l'élastomère ou du caoutchouc, intervenant circonférentiellement entre le voile 13A et lesdites rondelles 14A pour les accoupler élastiquement circonférentiellement, les rondelles 14A entourant à jeu le moyeu 12.

Ici les ressorts 15A sont montés sans jeu dans lesdites fenêtres 17A,18A mais bien entendu certains peuvent être montés sans jeu dans les fenêtres 18A et avec jeu dans les fenêtres 17A pour une meilleure filtration des vibrations. Ici six ressorts 15A sont répartis circonférentiellement régulièrement.

La rondelle de guidage 14A, dite seconde rondelle, la plus éloignée de la partie principale, de plus grande hauteur, des cannelures 20 et du voile 13B présente d'un seul tenant à sa périphérie externe des pattes d'assemblage 40 d'orientation axiale. Ces pattes 40, au nombre de quatre ici, réparties régulièrement circonférentiellement, traversent chacune à jeu de montage une échancrure 41 complémentaire formée à la périphérie externe de l'autre rondelle de guidage 14A, dite première rondelle. Une liaison en rotation entre les rondelles 14A est ainsi réalisée.

Cette première rondelle 14A entoure la partie principale des cannelures 20 et est propre à être montée de manière adjacente au voile 13B du dispositif B.

Les échancrures 41 sont ouvertes vers l'extérieur et ont une forme complémentaire aux pattes 40 plates et minces. Ces pattes 40 ont donc en section une forme rectangulaire.

Suivant une autre caractéristique de l'invention l'extrémité libre des pattes 40 est propre à constituer les saillies d'entraînement 23 et est déformée radialement vers l'intérieur pour former un moyen de retenue 42,142,242 propre à coopérer avec la face de la première rondelle 14A tournée à l'opposé du voile 13A.

Ces moyens de retenue forment donc des épaulements de retenue, les déformations ayant avantageusement une faible hauteur radiale.

Dans les figures 4 et 5 ces déformations consistent en des emboutis 42, dans les figures 6 et 7 il s'agit de crevés 142 et dans les figures 8 et 9 de replis 242 globalement radiaux tournés vers l'axe de l'ensemble.

Dans tous les cas les déformations ont une faible hauteur radiale et sont propres à coopérer avec le bord interne 140, d'orientation tangentielle, de l'échancrure 41 dotée d'arrondis pour raccordement dudit bord 140 aux bords latéraux 141, s'étendant transversalement, de l'échancrure ouverte 41 et éviter la formation d'amorces de rupture. Le bord intérieur 140 est dénommé ainsi parce qu'il est le plus proche de l'axe de l'ensemble.

Ces échancrures 41 sont formées à la faveur de saillies 50 radiales ici globalement de forme trapézoïdale que présente la première rondelle 14A à sa périphérie externe.

Bien entendu en variante on peut augmenter le diamètre externe de la rondelle pour former les échancrures 41.

De même les pattes d'assemblage 40 sont formées à la faveur de saillies radiales 150, globalement de forme trapézoidale, ou ici de forme rectangulaire, que présente la deuxième rondelle 14A à sa périphérie externe en regard des saillies 50. Les saillies 50,150 sont propres à être intercalées circonférentiellement entre deux ressorts consécutifs 15B du deuxième dispositif.

Bien entendu, on peut augmenter le diamètre externe de la deuxième rondelle pour former les pattes, toutes les combinaisons sont possibles par exemple première rondelle continue à diamètre augmentée et deuxième rondelle à saillie 150.

On notera suivant une caractéristique de l'invention, que les déformations 42,142,242 n'affectent pas les bords latéraux de celles-ci. Ainsi ces bords sont intacts pour coopérer avec les bords latéraux 141 de l'échancrure 41 et avec l'échancrure 24 du voile 13B de la figure 1. De préférence les déformations affectent centralement les pattes d'assemblage, c'est-à-dire de manière symétrique.

Ces pattes 40 s'étendent à distance du bord interne 140 de l'échancrure 41, parallèlement à celui-ci.

Un jeu radial existe donc entre les pattes 40 et le bord 140. On notera que les pattes 40 s'étendent dans le contour hors tout des saillies 50 et ne sont donc pas radialement protubérantes par rapport à celles-ci.

On notera que l'extrémité libre des replis 242 est chanfreinée (figure 8).

Dans les figures 4 et 5 et 6 et 7 il est formé naturellement des chanfreins. Avantageusement dans les figures 4 et 5 l'embouti 42 a une forme hémisphérique. Il a donc une forme très simple en étant peu agressif. Il est aisé à réaliser.

Ainsi la partie d'entraînement des pattes 40 (ses extrémités latérales), nécessaire à la liaison par coopération de formes avec les bords latéraux 141 des échancrures 41, est conservée et on peut réaliser aisément, du fait notamment de la longueur des pattes 40 et du jeu radial entre les pattes 40 et les bords 140, un assemblage par encliquetage entre les rondelles 41 ; les ressorts à boudin 15A définissant ici l'écartement axial entre les rondelles 14A, dépourvues de contact avec le voile 13A.

Ces ressorts forment donc naturellement des entretoises en sorte que le préamortisseur peut fonctionner avantageusement sans rondelle de frottement.

Grâce au jeu radial précité entre les pattes 40, les bords 140, on réduit l'effort pour encliqueter les pattes 40 qui sont admises à être introduites dans les échancrures 41 et à se déployer élastiquement vers l'extérieur lors de cette opération, pour après franchissement de l'échancrure revenir à leur position initiale.

Bien entendu, on effectue une légère surcourse. On notera que les saillies 150 favorisent une telle surcourse et offrent en même temps une surface d'appui à un outil pour effectuer l'encliquetage.

Après cette opération les déformations 42,142,242 viennent en prise avec le bord 140.

On appréciera que les crevés 142 favorisent le déploiement des pattes du fait de la grande longueur de leur inclinaison et que les emboutis 42 permettent de réduire au minimum l'effort d'encliquetage.

Bien entendu la présente invention n'est pas limitée à l'exemple de réalisation décrit. En particulier les déformations pourraient être réalisées après introduction des pattes 41 dans les échancrures.

On peut intercaler des rondelles de frottement entre le voile et les rondelles de guidage.

Les saillies 23 peuvent coopérer, selon les applications et la place disponible, avec des échancrures formées dans la partie basse des fenêtres 17B du voile 13B. Le voile 13B n'a pas forcément une forme en L il peut être plat. Une rondelle de frottement peut être collée sur la face externe de la deuxième rondelle 14A pour éviter un contact métal sur métal entre cette rondelle 14A et la rondelle de guidage 14B du dispositif B, notamment lorsque le voile 13B est plat, le dispositif de frottement à rondelle d'application et rondelle élastique serrant alors axialement le préamortisseur A entre le voile 13B et la rondelle 14B du deuxième dispositif B.

Dans tous les cas les pattes 40 n'interfèrent pas avec le voile 13A et les ressorts 15A du fait qu'elles s'étendent radialement au-dessus du voile 13A.

On peut donc disposer les ressorts 15A comme on le désire et augmenter leur taille et/ou leur nombre.

Les échancrures 41 peuvent consister en des fenêtres, un jeu radial suffisant existant alors entre les pattes 40 et le bord supérieur de l'échancrure 41.

Le support 10 peut être fixé directement sur un plateau de réaction. En variante il peut consister en un piston d'un embrayage de verrouillage monté dans le carter d'un convertisseur de couple, le préamortisseur étant alors lubrifié.

Dans tous les cas il est formé un bloc unitaire moyeu 12 - préamortisseur A imperdable, manipulable et transportable.

Bien entendu, en fonction des application une partie seulement des pattes peut être dotée de déformations, les autres démeurent inchangées.

On appréciera que le mode de réalisation de figures 4 et 5 est particulièrement avantageux, car il conduit à la formation d'une bosse et affecte très peu la patte. Cet embouti 42 très local peut avoir une forme hémisphérique. Dans tous les cas, il est aisé à réaliser et est peu agressif.

On appréciera que les pattes 40 ont ici une largeur constante du fait qu'elle s'étendent radialement au-delà du voile en sorte qu'elles ne limitent pas le débattement du voile 13A par rapport aux rondelles 14A. Ces pattes 40 sont ainsi plus souples.

## Revendications

1. Préamortisseur de torsion, notamment pour véhicule automobile, propre à être monté entre l'une des rondelles de guidage (14B) et le voile (13B) d'un second dispositif amortisseur de torsion (B), du genre comportant deux rondelles de guidage métalliques (14A) disposées axialement de part et d'autre d'un voile (13A) solidaire d'un moyeu (12), dans lequel l'une des rondelles de guidage (14A), dite deuxième rondelle, comporte des pattes d'assemblage (40) d'orientation axiale issues d'un seul tenant de la périphérie externe de celle-ci, et traversent chacune à jeu de montage une échancrure complémentaire (41) formée à la périphérie externe de l'autre rondelle de guidage (14A), dite première rondelle, pour coopérer avec des bords latéraux (141) associés d'échancrures (41) pour liaison en rotation de la première rondelle (14A) avec la seconde rondelle (14A), et dans lequel l'extrémité libre des pattes d'assemblage (40) est propre à constituer une saillie d'entraînement avec le voile (13B) du deuxième dispositif amortisseur (B), caractérisé en ce que l'extrémité libre de certaines au moins des pattes d'assemblage (40) est déformée radialement vers l'intérieur pour former un moyen de retenue (42,142,242) propre à coopérer avec la face de la première rondelle (14A) tournée à l'opposé du voile (13A), en ce que les déformations (42,142,242) laissent intact les bords latéraux (141) de ces pattes d'assemblage (40) déformées, et en ce que lesdites pattes d'assemblage (40) s'étendent radialement au-delà de la périphérie externe du voile (13A).

2. Préamortisseur selon la revendication 1, caractérisé en ce que les déformations (42,142,242) sont pratiquées initialement avant introduction dans les échancrures (41) en sorte qu'il est formé des moyens d'encliquetage à pattes d'assemblage élastiquement déformables (40) intervenant entre les deux rondelles de guidage (14A).

3. Préamortisseur selon la revendication 1 ou 2, caractérisé en ce qu'un jeu radial existe entre les bords internes (140), les plus proches de l'axe du préamortisseur (A), des échancrures (41) et les pattes d'assemblage (40).

4. Préamortisseur selon l'une quelconque des revendications 1 à 3, caractérisé en ce que les déformations consistent en des emboutis (42).

5. Préamortisseur selon l'une quelconque des revendications 1 à 3, caractérisé en ce que les déformations consistent en des crevés (142).

6. Préamortisseur selon l'une quelconque des revendications 1 à 3, caractérisé en ce que les déformations consistent en des replis (242) globalement radiaux tournés vers l'axe de l'ensemble.

7. Préamortisseur selon la revendication 6, caractérisé en ce que l'extrémité libre des replis (242) est chanfreinée.

8. Préamortisseur selon l'une quelconque des revendications précédentes, caractérisé en ce que les déformations (42,142,242) affectent centralement les pattes d'assemblage (41) en laissant intact les bords latéraux desdites pattes, pour coopération avec les bords latéraux (141) des échancrures (40).

9. Préamortisseur selon l'une quelconque des revendications précédentes, caractérisé en ce que les pattes d'assemblage (40) sont formées à la faveur de saillies radiales (150), que présente la deuxième rondelle à sa périphérie externe, tandis que les échancrures (41) sont formées à la faveur de saillies radiales (50), que présente la première rondelle (14A) à sa périphérie externe en regard des saillies (150) de la deuxième rondelle (14B).

10. Préamortisseur selon l'une quelconque des revendications précédentes, caractérisé en ce que les échancrures (41) sont ouvertes vers l'extérieur.

## Patentansprüche

1. Torsionsvordämpfer, insbesondere für Kraftfahrzeuge, der zwischen einer der Führungsscheiben (14B) und der Mitnehmerscheibe (13B) einer zweiten Torsionsdämpfervorrichtung (B) eingebaut werden kann, umfassend zwei Führungsscheiben (14A) aus Metall, die axial beiderseits einer fest mit einer Nabe (12) verbundenen Mitnehmerscheibe (13A) angeordnet sind, wobei eine der Führungsscheiben (14A), die als erste Führungsscheibe bezeichnet wird, axial ausgerichtete Verbindungsansätze (40) umfaßt, die einstückig aus ihrem äußeren Umfang herausgearbeitet sind und die jeweils mit Einbauspiel durch eine formschlüssige Aussparung (41) hindurchgehen, die am äußeren Umfang der als zweite Führungsscheibe bezeichneten anderen Führungsscheibe (14A) ausgebildet ist, um mit zugehörigen Seitenkanten (141) von Aussparungen (41) für die drehfeste Verbindung der ersten Führungsscheibe (14A) mit der zweiten Führungsscheibe (14A) zusammenzuwirken, und wobei das freie Ende der Verbindungsansätze (40) einen Mitnahmevorsprung mit der Mitnehmerscheibe (13B) der zweiten Dämpfervorrichtung bilden kann, **dadurch gekennzeichnet**, daß das freie Ende zumindest einiger der Verbindungsansätze (40) radial nach innen verformt ist, um ein Haltemittel (42, 142, 242) zu bilden, das mit der entgegengesetzt zur Mitnehmerscheibe (13A) gerichteten Seite der ersten Führungsscheibe (14A) zusammenwirken kann, daß die Verformungen (42, 142, 242) die Seitenkanten (141) dieser verformten Verbindungsansätze (40) unbeeinträchtigt lassen und daß sich die besagten Verbindungsansätze (40) radial über den äußeren Umfang der Mitnehmerscheibe (13A) hinaus erstrecken.

2. Vordämpfer nach Anspruch 1 , **dadurch gekennzeichnet**, daß die Verformungen (42, 142, 242) anfänglich vor der Einführung in die Aussparungen (41) so eingearbeitet sind, daß Verrastungsmittel mit elastisch verformbaren Verbindungsansätzen (40) gebildet werden, die zwischen den beiden Führungsscheiben (14A) wirksam sind.

3. Vordämpfer nach Anspruch 1 oder 2 , **dadurch gekennzeichnet**, daß ein radiales Spiel zwischen den am nächsten an der Achse des Vordämpfers (A) liegenden Innenkanten (140) der Aussparungen (41) und den Verbindungsansätzen (40) besteht.

4. Vordämpfer nach einem der Ansprüche 1 bis 3, **dadurch gekennzeichnet**, daß die Verformungen aus Vertiefungen (42) bestehen.

5. Vordämpfer nach einem der Ansprüche 1 bis 3, **dadurch gekennzeichnet**, daß die Verformungen aus Kragen (142) bestehen.

6. Vordämpfer nach einem der Ansprüche 1 bis 3, **dadurch gekennzeichnet**, daß die Verformungen aus insgesamt radialen Falzungen (242) bestehen, die zur Achse der Baugruppe gerichtet sind.

7. Vordämpfer nach Anspruch 6 , **dadurch gekennzeichnet**, daß das freie Ende der Falzungen (242) abgeschrägt ist.

8. Vordämpfer nach einem der vorangehenden Ansprüche, **dadurch gekennzeichnet**, daß die Verformungen (42, 142, 242) mittig auf die Verbindungsansätze (41) übergreifen, wobei sie die Seitenkanten der besagten Ansätze unbeeinträchtigt lassen, um das Zusammenwirken mit den Seitenkanten (141) der Aussparungen (40) herbeizuführen.

9. Vordämpfer nach einem der vorangehenden Ansprüche, **dadurch gekennzeichnet**, daß die Verbindungsansätze (40) mittels radialer Vorsprünge (150) ausgebildet sind, die die zweite Führungsscheibe an ihrem äußeren Umfang aufweist, während die Aussparungen (41) mittels radialer Vorsprünge (50) ausgebildet sind, die die erste Führungsscheibe (14A) an ihrem äußeren Umfang gegenüber den Vorsprüngen (150) der zweiten Führungsscheibe (14B) aufweist.

10. Vordämpfer nach einem der vorangehenden Ansprüche, **dadurch gekennzeichnet**, daß die Aussparungen (41) nach außen offen sind.

## Claims

1. Torsion predamper, notably for motor vehicles, suitable for being mounted between one of the guide washers (14B) and the web (13B) of a second torsion damping device (B), of the type having two metal guide washers (14A) disposed axially on each side of a web (13A) fixed to a hub (12), in which one of the guide washers (14A), referred to as the second washer, has axially oriented mounting lugs (40) made in a single piece with the outer periphery thereof, and each passing with assembly clearance through a complementary recess (41) formed on the outer periphery of the other guide washer (14A), referred to as the first washer, to cooperate with associated lateral edges (141) of recesses (41) for the connection of the first washer (14A) to the second washer (14A) with respect to rotation, and in which the free end of the mounting lugs (40) is suitable for constituting a driving projection with the web (13B) of the second damping device (B), characterised in that the free end of at least some of the mounting lugs (40) is deformed radially inwards to form a retaining means (42, 142, 242) suitable for cooperating with the face of the first washer (14A) turned the opposite way to the web (13A), in that the deformations (42, 142, 242) leave intact the lateral edges (141) of the said deformed mounting lugs (40), and in that the said mounting lugs (40) extend radially beyond the outer periphery of the web (13A).

2. Predamper according to Claim 1 or 2, characterised in that the deformations (42, 142, 242) are initially formed before insertion into the recesses (41) so that snapping-in means with elastically deformable mounting lugs (40) are formed which act between the two guide washers (14A).

3. Predamper according to Claim 1 or 2, characterised in that a radial clearance exists between the inner edges (140) closest to the axis of the predamper (A), recesses (41) and mounting lugs (40).

4. Predamper according to any one of Claims 1 to 3, characterised in that the deformations consist of hollows (42).

5. Predamper according to any one of Claims 1 to 3, characterised in that the deformations consist of indentations (142).

6. Predamper according to any one of Claims 1 to 3, characterised in that the deformations consist of folds (242) radial overall and turned towards the axis of the assembly.

7. Predamper according to Claim 6, characterised in that the free end of the folds (242) is bevelled.

8. Predamper according to any of the preceding claims, characterised in that the deformations (42, 142, 242) affect the mounting lugs (41) centrally, leaving the lateral edges of the said lugs intact, for cooperation with the lateral edges (141) of the recesses (40).

9. Predamper according to any one of the preceding claims, characterised in that the mounting lugs (40) are formed by means of radial projections (150) which the second washer has on its outer periphery, while the recesses (41) are formed by means of radial projections (50) which the first washer (14A) has on its outer periphery facing the projections (150) of the second washer (14B).

10. Predamper according to any one of the preceding claims, characterised in that the recesses (41) are open towards the outside.
